# EUROPEAN PATENT SPECIFICATION

(11) **EP 3 906 346 B1**
(45) Date of publication and mention of the grant of the patent: **24.05.2023**
(21) Application number: 21727345.7
(22) Date of filing: 22.02.2021
(51) Int. Cl.: E04H 12/22

(54) **LIGHT POLE REPLACEMENT SYSTEM**
LATERNENPFAHL AUSTAUSCHSYSTEM
SYSTEME DE REMPLACEMENT DE LANTERNE D'ÉCLAIRAGE

(30) Priority: 02.03.2020 US 202016806268
(43) Date of publication of application: 10.11.2021
(73) Proprietor: Helicore LLC, Southbury, CT 06488 (US)
(72) Inventor: RUSS, Kevin, J., Southbury CT 06488 (US); DOTSON, Joshua, A., Sylvania OH 43560 (US); TURNER, Lucas, B., Montclair CA 91673 (US)
(74) Representative: Basck Limited
(86) International application number: PCT/US2021/019133
(87) International publication number: WO 2021/178158

(56) References cited:
- EP-A2- 1 541 770
- AU-A4- 2017 100 204
- CA-A1- 2 155 504
- US-B1- 7 721 490
- US-B1- 10 077 893
- US-B1- 10 077 893

## Description

### BACKGROUND

The latest generation of mobile broadband networks (i.e., 5G) can function through small cells that are integrated into light poles along city streets. These light poles provide light to the city streets and also function as access points to a mobile broadband network. However, conventional methods to replace an existing light pole require an existing foundation to be removed in order to install a new light pole that is cellular integrated. Removing an existing foundation may take several weeks to accomplish due to concrete foundations needing to be dug up, new forms put in place and time for new concrete to cure. Alternatively, a new foundation may be dug in a new location. However, installing a light pole in a new location can esthetically ruin the look of evenly spaced poles along a street. Therefore, it would be desirable to implement a light pole replacement system that is faster than conventional methods and allows for the spacing of existing light poles to remain esthetically correct. In the US granted patent US10077893B 1"Removable anchoring system and uses thereof' there is described, an anchoring system that may include one or more anchors. An anchor may include a first coupling member, a second coupling member, and a plate. The anchor may be coupleable to other anchors and/or objects. The anchoring system may be used to secure an object to a location.

In the EP patent application EP1541770A2 "Anchoring assembly" there is described an anchoring assembly for anchoring a structure to the ground, comprising an anchoring pile (2) having a rotatably drivable shaft (3) which is provided at least at its free end with a ground drill element (4) for screwing the anchoring pile (2) into the ground, and an elongate foundation element (8) which can be moved into the ground, in which the shaft (3) of the anchoring pile (2) is rotatably connected to the foundation element (8), extends substantially in the longitudinal direction of the foundation element (8) and, together with the drill element (4), extends at least partially as far as under the foundation element (8).

In the Canadian patent CA2155504A1 "GROUND ANCHOR" there is described a ground anchor comprises an elongate body with a flight at a lower end of the body. The flight is a length of 60.96 cm (24 inches) and the elongate body a length of the order of 243.84 cm (8 feet) and is formed by two tubes arranged end to end coupled by a cylindrical sleeve pinned to the adjacent ends of the tubes. A winged stabilizer assembly includes a sleeve over an upper end of the tubular body. The stabilizer assembly is clamped downwardly into the ground by a nut welded to a threaded rod which engages into a second nut welded to the top of the tube. The threaded rod is thus supported vertically upwardly from the top of the tube and supports a mounting assembly. The mounting assembly comprises a bracket having a base plate and a mounting plate parallel to the base plate with a sleeve therebetween for receiving the upper end of the threaded rod. A nut carries the mounting plate adjustably on the threaded rod. A support plate parallel to the mounting plate is carried on a second nut on the threaded rod. The mounting plate and the support plate are clamped together by a pair of bolts parallel to the threaded rod.

In the Australian Patent AU2017100204A4 "Screw pile for use with solar panels: there is described a screw pile (10) for use in mounting a solar panel (62) on a pole or the like in ground, comprises a, typically multi-turn, helical screw (12) for engaging with ground and a pole having a first end attached to the helical screw, typically by welding, and a distal second end defining an engagement means (22) for attaching an extension element of a plate or the like for mounting a solar panel.

In the US granted patent US7721490B1 "System and method for installing a base for a roadside utility pole" there is described a system and method for creating a pole support base for the installation of a road-side pole. A mounting head assembly is provided. Support legs extend from the bottom surface of the mounting head assembly and support the mounting head assembly at a predetermined height that can be selectively adjusted. Pole mounts are provided on the top surface of the mounting head assembly that enable the base of a pole to be bolted to the mounting head assembly. A hole is excavated in the place where the pole is to be erected. The mounting head assembly is placed into the hole. The legs support the mounting head assembly within the hole and enable the mounting head assembly to be adjusted for height and levelness. The hole is then filled with poured concrete until at least the legs are submersed.

### SUMMARY

According to the invention, it is provided a light pole replacement system comprising:
a foundation plate to support a light pole;
a plurality of anchor tubes;
threaded rods; and
tension bolt adapters each comprising a top portion to receive a respective one of the threaded rods, and a bottom portion that comprises an opening to receive one or more fasteners for securing each tension bolt adapter to a respective one of the plurality of anchor tubes, wherein the plurality of anchor tubes are placed into the ground based on a determined placement of the plurality of anchor tubes, holes are created in the foundation plate based on a location of the plurality of anchor tubes and the foundation plate is placed over the plurality of anchor tubes with the threaded rods and the tension bolt adapters in the plurality of anchor tubes to couple the foundation plate to the plurality of anchor tubes; wherein the bottom portion comprises a first half and a second half and the opening to receive the one or more fasteners is defined by a first curved section of the first half and a second curved section of the second half; and
wherein each of the tension bolt adapters is secured to a respective one of the plurality of anchor tubes via a bolt that extends through, and perpendicular to, the respective one of the plurality of anchor tubes and
wherein the first half and the second half are separated by a space.

### BRIEF DESCRIPTION OF THE DRAWING

FIG. 1 illustrates a conventional light pole.
FIG. 2 illustrates an excavation associated with a light pole replacement system in accordance with some embodiments.
FIG. 3 illustrates a light pole replacement system in accordance with some embodiments.
FIG. 4 illustrates a portion of a light pole replacement system in accordance with some embodiments.
FIG. 5 illustrates a portion of a light pole replacement system attached in accordance with some embodiments.

### DETAILED DESCRIPTION

The present embodiments described herein relate to a light pole replacement system. In particular, the present embodiments relate to a light pole replacement system that allows for faster installation of a replacement light pole than conventional methods with the replacement light pole remaining in a same position as a previous light pole. In some instances, the replacement light pole may be installed in a single day because it may go over the area of an existing foundation, or footing, and may include the flexibility to work around locations of existing buried utilities. We also describe that the replacement light pole may comprise a cellular integrated light pole (e.g., a light pole that include a cellular communication antennae or antennas). Building codes associated light poles are different than building codes associated with cellular integrated light poles and when a light pole is cellular integrated, its primary function is considered to be that of a cellular pole and thus the it is installed based on a different building code.

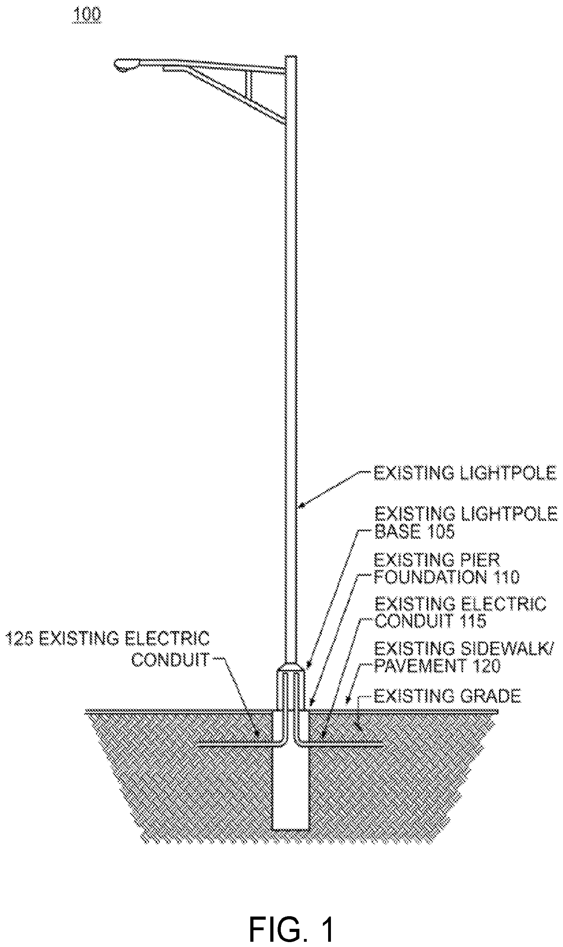

Referring now to FIG. 1, a conventional light pole 100 is illustrated. The conventional light pole 100 includes a base 105 that is mounted to a concrete foundation 110 and the conventional light pole 100 may reside on, or next to, a sidewalk or pavement 120. Electrical conduit 115/125 may be run through the foundation 110, next to the foundation 110, or in an area surrounding the foundation 110 to provide electrical or other services to the light pole 100.

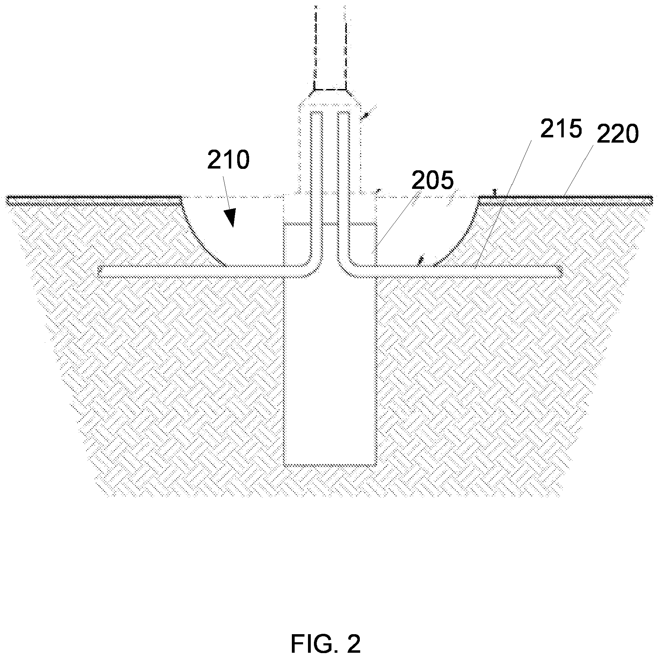

Referring now to FIG. 2, to install a replacement light pole, a user may excavate 30.48-182.88 cm (1'-6') of earth to create an excavated area 210 around an existing light pole to facilitate the breaking out of an existing foundation 205. The existing foundation may be broken out anywhere from 6 inches to 3 feet below a finished grade 220 where the existing electrical conduit 215 may be kept in place. We also describe, the electrical conduit 215 may house wires carrying electronically and/or communication wires for carrying communication signals.

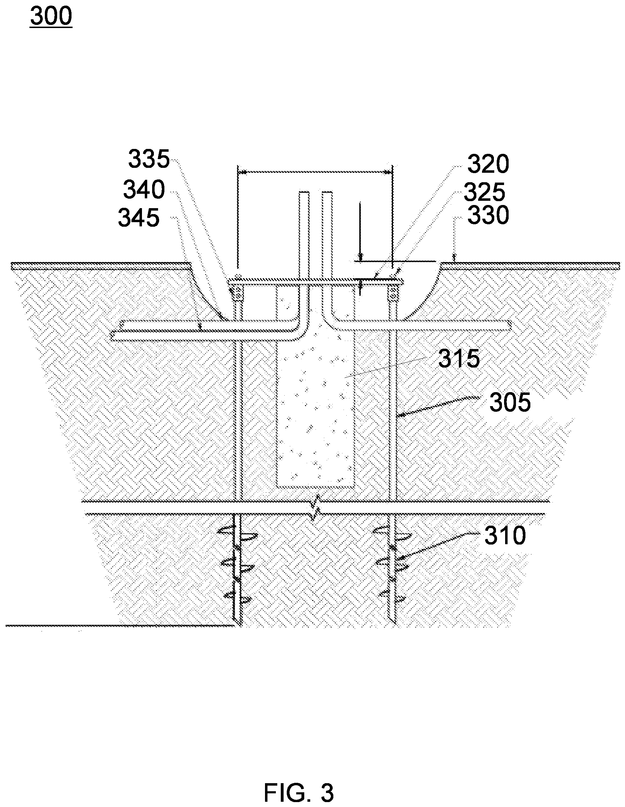

Referring now to FIG. 3, a light pole replacement system 300 is illustrated according to some embodiments. As illustrated in FIG. 3, a foundation 315 has been broken out to below ground level 330 with electrical conduits 345 still intact. A user may locate placement of anchors 310 to be installed around existing utilities such as electrical conduits and/or water lines. Anchors 310, and their associated anchor tubes 305, may be installed into the ground (e.g. driven into the ground or installed using other methods of installing anchors). The user may monitor torque and depth of the anchors 310 and their associated anchor tubes 305. In some embodiments, the anchors 310 may include helical anchors 310 and the tubes 305 associated with the helical anchors that may be cut to length as determined by the user. A helical anchor may include an extendable deep foundation system with helical bearing plates coupled (e.g., welded or fastened) to a tube or shaft for transferring a load from the tube to the surrounding earth through the use of the bearing plates. We also describe , the tubes 305 may be cut to a determined length based on a finished grade associated with the existing light pole. The anchors 310 and their associated tubes 305 may installed between 2 and 20 feet below a finished grade associated with the existing light pole.

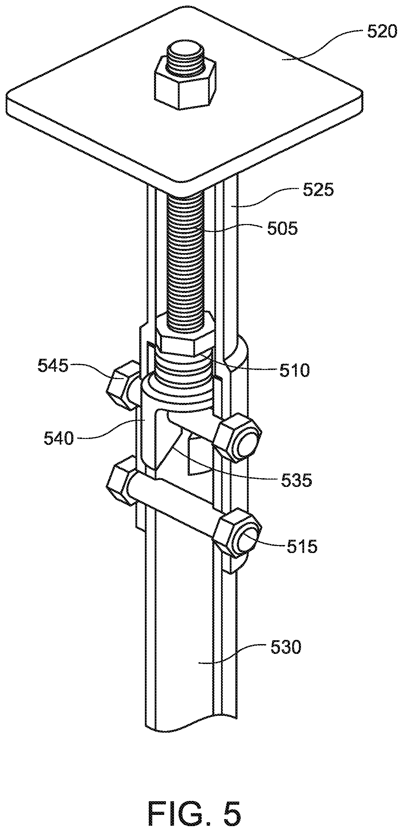

A tension bolt adapter 335 may be inserted into each respective tube 305. Referring to FIG. 5, a tension bolt adapter 540 inserted into a tube 530 is illustrated according to some embodiments. The tension bolt adapter 540 may include a top portion 510 to receive a threaded rod 505, and an opening 535 to receive one or more fasteners 545 (e.g., bolts). The top portion 510 may include a threaded pocket or opening to receive the threaded rod. The opening 535 to receive one or more fasteners 545 may receive the one or more fasteners when they extend perpendicular to a length of the tube. The one or more fasteners 545 may secure the tension bolt adapter 540 to the tube 530. We also describe, a protective covering 525 may be placed over the threaded rod to keep moisture and dirt from entering the tube 530. The covering 525 may be secured to the tube 530 via a fastener 515 (e.g., a bolt). The threaded rod 505, after being inserted into the tension bolt adapter 540, may be cut to length as determined by a user. The threaded rod 505 may be inserted through, and secured to, a foundation plate 520 to support a replacement light pole and the threaded rod 505 may be secured to the foundation plate 520 by a nut or other fastener. We also describe the foundation plate may rest on the protective covering 525. Thus, when the tubes are cut to a same height, the foundation plate is leveled by sitting on top of the protective covering 525 or tubes.

Referring back to FIG. 3, anchor tube 305 locations may be transferred to a foundation plate 320 and the foundation plate 320 and holes may be created in the foundation plate. For example, the holes may be field drilled, knocked out, or punched. For example, since the anchor tubes may be located in different positions based on existing utilities, holes in the foundation plate may not be able to be determined beforehand. The foundation plate 320 with field drilled holes may be placed over the anchor tubes 305 with threaded rods 325,505 with tension bolt adapter 335 in the tubes 305. We also describe, the foundation plate 320 may rest on the tubes 305. Thus, when the tubes are cut to a same height, the foundation plate 320 is leveled by sitting on top of the tubes 305. The foundation plate 320 may be set on, or above, the anchor tubes 305, leveled and then bolted to the treaded rods 325,505 using the threaded rods 325,505. To connect the replacement light pole to the foundation plate 320, breakaway bolts may be installed in the foundation plate 320. The breakaway bolts may be secured in a set of holes that are optimized for a determined offset from a curb or regular bolts (e.g., grade 8 bolts) if outside a travel lane or a clear zone. The regular bolts may comprise grade 5 or harder bolts.

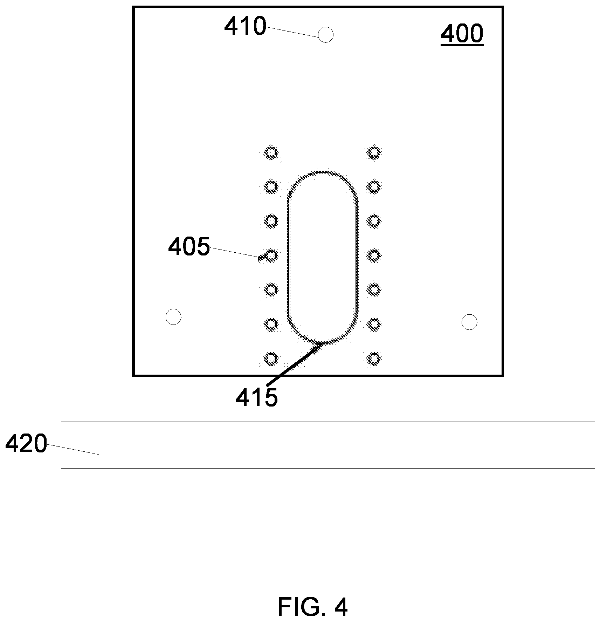

For example, and now referring to FIG. 4, an embodiment of a foundation plate 400 is illustrated. The foundation plate 400 may include a first plurality of holes 410 to receive threaded rods such as threaded rods 325,505 as described in FIG. 3. The first plurality of holes 410 may be determined onsite and the location of the first plurality of holes 410 may be based on a determined location of existing utilities. Furthermore, the foundation plate 400 may include a second plurality of holes 410 that surround or are aligned with an opening 415. The opening 415 may receive electrical conduit containing power or communication services and the second plurality of holes 410 may receive breakaway bolts to secure a replacement light pole to the foundation plate 400.

We also describe, the light pole replacement system described herein may function as a retrofit system. We also describe, the light pole replacement system described herein may be used for installing cellular integrated light poles or simply cellular poles where light poles did not previously exist.

This written description uses examples to disclose multiple embodiments, including the preferred embodiments, and also to enable any person skilled in the art to practice the invention, including making and using any devices or systems and performing any incorporated methods. Aspects from the various embodiments described, as well as other known equivalents for each such aspects, can be mixed and matched by one of ordinary skill in the art to construct additional embodiments and techniques all within the scope of the present invention as defined by the appended claims.

## Claims

1. A light pole replacement system (300) comprising:
a foundation plate (320) to support a light pole;
a plurality of anchor tubes (305; 530);
threaded rods (505); and
tension bolt adapters (540) each comprising a top portion (510) to receive a respective one of the threaded rods (505), and a bottom portion that comprises an opening (535) to receive one or more fasteners (545) for securing each tension bolt adapter (540) to a respective one of the plurality of anchor tubes (305; 530),
wherein the plurality of anchor tubes (305; 530) are placed into the ground based on a determined placement of the plurality of anchor tubes (305; 530), holes (410) are created in the foundation plate (320) based on a location of the plurality of anchor tubes (305; 530) and
the foundation plate (320) is placed over the plurality of anchor tubes (305; 530) with the threaded rods (505) and the tension bolt adapters (540) in the plurality of anchor tubes (305; 530) to couple the foundation plate (320) to the plurality of anchor tubes (305; 530);
wherein the bottom portion of each tension bolt adapter (540) comprises a first half and a second half, wherein the first half and second half are separated by a space and wherein the opening (535) to receive the one or more fasteners (545) is defined by a first curved section of the first half and a second curved section of the second half; and
wherein each of the tension bolt adapters (540) is secured to a respective one of the plurality of anchor tubes (305; 530) via said one ore more fasteners (545) comprising a bolt that extends through, and perpendicular to, the respective one of the plurality of anchor tubes (305; 530).

2. The system of claim 1, wherein the top portion (510) of each tension bolt adapter (540) is threaded to receive a respective one of the threaded rods (505).

3. The system of claim 1, wherein the plurality of anchor tubes (305; 530) comprises helical anchors (310).

4. The system of claim 1, wherein a determined placement of the plurality of anchor tubes (305; 530) is based on avoiding contact with existing utilities and a position of the plurality of anchor tubes (305; 530) is transferred to the foundation plate (320).

5. The system of claim 1, wherein a top portion (510) of each of the tension bolt adapters receives a respective one of the threaded rods (505) that extend out from the respective one of the plurality of anchor tubes (305; 530).

6. The system of claim 5, further comprising one or more breakaway bolts or grade 5 or harder bolts coupled to the foundation plate (320) and the replacement light pole.

## Patentansprüche

1. Lichtmast-Ersetzungssystem (300), umfassend:
eine Fundamentplatte (320), um einen Lichtmast zu tragen;
eine Vielzahl von Ankerrohren (305; 530);
Gewindestangen (505); und
Zugbolzenadapter (540), die jeweils einen oberen Abschnitt (510) zur Aufnahme einer entsprechenden der Gewindestangen (505) und einen unteren Abschnitt mit einer Öffnung (535) zur Aufnahme eines oder mehrerer Befestigungselemente (545) zur Befestigung jedes Zugbolzenadapters (540) an einem entsprechenden der Vielzahl von Ankerrohren (305; 530) umfassen,
wobei die Vielzahl von Ankerrohren (305; 530) gemäß einer bestimmten Platzierung der Vielzahl von Ankerrohren (305; 530) in dem Boden platziert wird, wobei Löcher (410) basierend auf einem Standort der Vielzahl von Ankerrohren (305; 530) in der Fundamentplatte (320) gebildet werden, und
die Fundamentplatte (320) über die Vielzahl von Ankerrohren (305; 530) mit den Gewindestangen (505) und den Zugbolzenadaptern (540) in der Vielzahl von Ankerrohren (305; 530) platziert sind, um die Fundamentplatte (320) mit der Vielzahl von Ankerrohren (305; 530) zu koppeln;
wobei der untere Abschnitt jedes Zugbolzenadapters (540) eine erste Hälfte und eine zweite Hälfte umfasst, wobei die erste Hälfte und die zweite Hälfte durch einen Raum getrennt sind und wobei die Öffnung (535) zum Aufnehmen des einen oder der mehreren Befestigungselemente (545) durch einen ersten gekrümmten Abschnitt der ersten Hälfte und einen zweiten gekrümmten Abschnitt der zweiten Hälfte definiert ist; und
wobei jeder der Zugbolzenadapter (540) über das eine oder die mehreren Befestigungselemente (545) an einem entsprechenden der Vielzahl von Ankerrohren (305; 530) befestigt ist, die einen Bolzen umfassen, der sich durch das entsprechende der Vielzahl von Ankerrohren (305; 530) und senkrecht dazu erstreckt.

2. System nach Anspruch 1, wobei der obere Abschnitt (510) jedes Zugbolzenadapters (540) mit einem Gewinde versehen ist, um eine entsprechende der Gewindestangen (505) aufzunehmen.

3. System nach Anspruch 1, wobei die Vielzahl von Ankerrohren (305; 530) schraubenförmige Anker (310) umfasst.

4. System nach Anspruch 1, wobei eine bestimmte Platzierung der Vielzahl von Ankerrohren (305; 530) derart erfolgt, dass ein Kontakt mit bestehenden Versorgungseinrichtungen vermieden wird und eine Position der Vielzahl von Ankerrohren (305; 530) auf die Fundamentplatte (320) übertragen wird.

5. System nach Anspruch 1, wobei ein oberer Abschnitt (510) jedes der Zugbolzenadapter eine jeweilige der Gewindestangen (505) aufnimmt, die sich aus dem jeweiligen der Vielzahl von Ankerrohren (305; 530) nach außen erstrecken.

6. System nach Anspruch 5, ferner umfassend eine oder mehrere Abreißschrauben oder Grad-5- oder härtere Bolzen, die mit der Fundamentplatte (320) und dem Ersatzlichtmast gekoppelt sind.

## Revendications

1. Système de remplacement de poteau d'éclairage (300) comprenant :
une plaque de fondation (320) destinée à supporter un poteau d'éclairage ;
une pluralité de tubes d'ancrage (305 ; 530) ;
des tiges filetées (505) ; et
des adaptateurs de boulon de tension (540) comprenant chacun une partie haute (510) destinée à recevoir l'une respective des tiges filetées (505), et une partie basse qui comprend une ouverture (535) destinée à recevoir un ou plusieurs éléments de fixation (545) afin d'arrimer chaque adaptateur de boulon de tension (540) à l'un respectif de la pluralité de tubes d'ancrage (305 ; 530),
dans lequel la pluralité de tubes d'ancrage (305 ; 530) sont placés dans le sol sur la base d'un placement déterminé de la pluralité de tubes d'ancrage (305 ; 530), des trous (410) sont créés dans la plaque de fondation (320) sur la base d'un emplacement de la pluralité de tubes d'ancrage (305 ; 530) et
la plaque de fondation (320) est placée sur la pluralité de tubes d'ancrage (305 ; 530) avec les tiges filetées (505) et les adaptateurs de boulon de tension (540) dans la pluralité de tubes d'ancrage (305 ; 530) pour coupler la plaque de fondation (320) à la pluralité de tubes d'ancrage (305 ; 530) ;
dans lequel la partie basse de chaque adaptateur de boulon de tension (540) comprend une première moitié et une seconde moitié, dans lequel la première moitié et la seconde moitié sont séparées par un espace et dans lequel l'ouverture (535) pour recevoir les un ou plusieurs éléments de fixation (545) est définie par une première section incurvée de la première moitié et une seconde section incurvée de la seconde moitié ; et
dans lequel chacun des adaptateurs de boulon de tension (540) est arrimé à l'un respectif de la pluralité de tubes d'ancrage (305 ; 530) via lesdits un ou plusieurs éléments de fixation (545) comprenant un boulon qui s'étend à travers l'un respectif de la pluralité de tubes d'ancrage (305 ; 530) et perpendiculairement à celui-ci.

2. Système selon la revendication 1, dans lequel la partie haute (510) de chaque adaptateur de boulon de tension (540) est filetée pour recevoir l'une respective des tiges filetées (505).

3. Système selon la revendication 1, dans lequel la pluralité de tubes d'ancrage (305 ; 530) comprend des ancrages hélicoïdaux (310) .

4. Système selon la revendication 1, dans lequel un placement déterminé de la pluralité de tubes d'ancrage (305 ; 530) est basé sur le fait d'éviter le contact avec des installations existantes et une position de la pluralité de tubes d'ancrage (305 ; 530) est transférée à la plaque de fondation (320).

5. Système selon la revendication 1, dans lequel une partie haute (510) de chacun des adaptateurs de boulon de tension reçoit l'une respective des tiges filetées (505) qui s'étend hors de l'un respectif de la pluralité de tubes d'ancrage (305 ; 530).

6. Système selon la revendication 5, comprenant en outre un ou plusieurs boulons de rupture ou boulons de dureté de grade 5 ou plus couplés à la plaque de fondation (320) et au poteau d'éclairage de remplacement.
